Europäisches Patentamt

European Patent Office

Office européen des brevets

(19)

(11) Numéro de publication: **0 251 928 B1**

(12) **FASCICULE DE BREVET EUROPEEN**

(45) Date de publication de fascicule du brevet:
30.10.91

(51) Int. Cl.⁵: **H01H 9/54**, H02H 7/26

(21) Numéro de dépôt: 87401517.5

(22) Date de dépôt: **01.07.87**

(54) **Dispositif de protection contre les courts-circuits pour réseau alternatif et discjoncteur-limiteur approprié à un tel dispositif.**

(30) Priorité: **03.07.86 FR 8609659**

(43) Date de publication de la demande:
**07.01.88 Bulletin 88/01**

(45) Mention de la délivrance du brevet:
**30.10.91 Bulletin 91/44**

(84) Etats contractants désignés:
**AT BE CH DE ES GB IT LI NL SE**

(56) Documents cités:
**FR-A- 2 418 974**
**FR-A- 2 515 867**
**US-A- 3 805 113**

(73) Titulaire: **TELEMECANIQUE**
**43-45, Boulevard Franklin Roosevelt**
**F-92504 Rueil-Malmaison Cedex(FR)**

(72) Inventeur: **Morelli, Albert**
**34, rue du Président Wilson**
**F-78230 Le Pecq(FR)**

(74) Mandataire: **Marquer, Francis et al**
**Cabinet Moutard 35, Avenue Victor Hugo**
**F-78960 Voisins le Bretonneux(FR)**

Rank Xerox (UK) Business Services

## Description

La présente invention concerne un dispositif de protection d'un réseau alternatif de distribution contre les courants de court-circuit, ainsi qu'un disjoncteur-limiteur approprié à un tel dispositif.

Dans le but d'assurer une telle protection, il est connu depuis plusieurs années d'utiliser des disjoncteurs de type limiteur. Peu encombrants et légers, ces disjoncteurs sont capables d'effectuer une coupure ultra-rapide de courants présumés très importants, par exemple de 50 à 100 kA, en limitant l'intensité crête à une valeur de 15 à 30 kA par exemple. Les efforts électrodynamiques dans les jeux de barres sont ainsi réduits à des valeurs environ dix fois plus faibles que celles rencontrées avec des disjoncteurs non limiteurs et les énergies mises en jeu sont environ trente à cent fois plus faibles.

Les disjoncteur-limiteurs présentent des contacts séparables et un déclencheur magnétique susceptible d'ouvrir ces contacts par l'intermédiaire d'une serrure quand le courant atteint un seuil de déclenchement ; les contacts séparables - ou d'autres contacts séparables en série avec ceux-ci - sont susceptibles d'être ouverts très rapidement par répulsion électrodynamique lorsque le courant qui les traverse atteint un seuil de répulsion généralement légèrement supérieur au seuil de déclenchement.

De ce fait, les disjoncteurs-limiteurs ont généralement pour inconvénient de manquer de sélectivité et, si l'on utilise de tels appareils répartis sur plusieurs niveaux dans un système de distribution, on constate que le fonctionnement du système n'est pas satisfaisant. En effet, dès que le courant atteint dans un disjoncteur-limiteur aval le seuil de limitation, les contacts à répulsion électrodynamique du disjoncteur s'ouvrent. Comme le courant continue de croître pendant 1,5 à 2 ms avant de régresser, il risque de dépasser le seuil de limitation du disjoncteur-limiteur amont associé et l'on peut craindre que celui-ci déclenche également avec pour résultat la coupure de l'ensemble des branches aval qu'il alimente. Il en résulte que l'on désire, pour assurer la continuité de service, disposer aux niveaux amont des disjoncteurs dits sélectifs laissant passer la pointe de courant plutôt que des disjoncteurs-limiteurs.

L'absence de disjoncteurs-limiteurs au niveau immédiatement en amont - et a fortiori aux autres niveaux amont - entraîne dès lors des courants de court-circuit plus élevés et des efforts électrodynamiques condsidérables, ce qui nécessite d'utiliser pour le système de distribution des disjoncteurs lourds et chers et des jeux de barres très rigides et donc coûteux.

L'invention a notamment pour but d'obvier à ces inconvénients en concevant un dispositif de protection qui comprend des disjoncteurs-limiteurs sur au moins deux niveaux successifs du système de distribution et qui présente néanmoins la sélectivité souhaitée.

Elle a pour autre but d'obtenir une telle sélectivité à l'aide de moyens électroniques simples et vise enfin à priviligier la sécurité dans le cas d'un défaut affectant le bon fonctionnement desdits moyens.

L'invention concerne plus particulièrement un dispositif de protection d'un réseau alternatif de distribution contre les courants de court-circuit, le réseau comprenant, d'une façon analogue à celle décrite dans le brevet US-A-3 805 113, au moins un disjoncteur-limiteur amont et au moins un disjoncteur-limiteur aval, ces disjoncteurs-limiteurs étant placés en série sur une branche amont et respectivement sur au moins une branche aval dépendante du réseau et comportant chacun un circuit principal de puissance doté de contacts séparables, d'un déclencheur magnétique et d'un limiteur capables de couper la branche correspondante lorsque le courant atteint respectivement un seuil de déclenchement et un seuil de limitation, dispositif dans lequel la branche aval présentant le disjoncteur-limiteur aval est munie d'un capteur d'intensité relié à un circuit de traitement à seuil qui génère un signal de neutralisation d'ouverture des contacts pour le disjoncteur-limiteur amont lorsque le courant dans la branche aval dépasse un seuil de neutralisation déterminé.

Selon l'invention, ce dispositif est caractérisé en ce que :

le susdit seuil de neutralisation est inférieur au seuil de déclenchement et/ou au seuil de limitation du disjoncteur-limiteur amont ;

- un couple de thyristors tête-bêche est disposé en parallèle au circuit principal de puissance du disjoncteur-limiteur amont, tandis qu'un circuit de commande des gâchettes desdits thyristors est agencé et commandé par le signal de neutralisation provenant du disjoncteur-limiteur aval pour rendre passant l'un au moins des thyristors et inhiber pendant une durée au plus égale à une alternance le circuit principal de puissance du disjoncteur-limiteur amont.

On parvient ainsi, par des moyens électroniques de neutralisation très simples, à concilier la sélectivité recherchée avec l'usage de disjoncteurs-limiteurs.

La description faite ci-après d'un exemple de réalisation non limitatif va permettre d'expliciter d'autres caractéristiques et avantages de l'invention.

La figure 1 est le schéma du dispositif de protection conforme à l'invention;

La figure 2 représente l'évolution d'un courant de court-circuit et de la tension correspondante d'arc du disjoncteur-limiteur aval dans le dispositif de la figure 1.

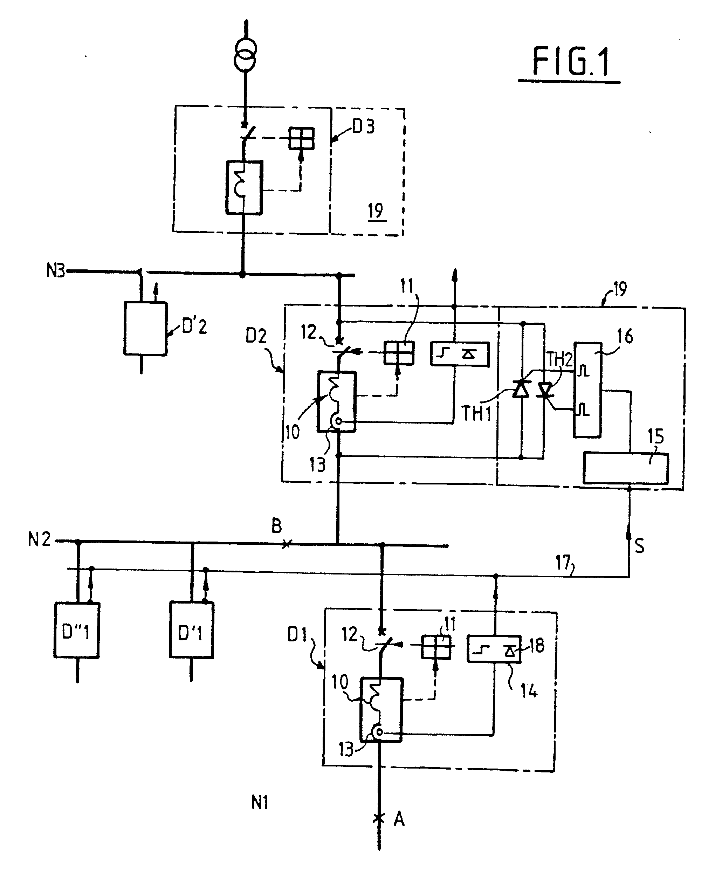

Le dispositif de protection illustré sur la figure 1 vise à protéger un réseau alternatif de distribution contre les courants de court-circuit. Le réseau présente plusieurs niveaux de distribution successifs, à savoir par exemple des niveaux terminaux N1, des niveaux secondaires N2 et un niveau général N3.

Entre les niveaux N1 et N2 sont disposés des disjoncteurs-limiteurs D1, D'1, etc... ; entre N2 et N3 des disjoncteurs-limiteurs D2, D'2, etc... ; en amont de N3 un disjoncteur éventuellement limiteur D3. Les disjoncteurs-limiteurs en question peuvent être à commande manuelle, électrique, pneumatique, etc...

Chaque disjoncteur-limiteur présente un circuit principal de puissance doté d'un déclencheur magnétothermique 10 agissant via une serrure 11 sur des contacts séparables 12. Le circuit principal de puissance présente un organe limiteur non indiqué, intégré ou juxtaposé au disjoncteur proprement dit et comprenant des contacts séparables à répulsion électrodynamique ou à percussion confondus avec les contacts 12 ou en série avec ceux-ci.

Dans chaque branche comprenant un disjoncteur-limiteur D1, D'1, ... et dépendante de la branche amont du réseau sur laquelle est disposé le disjoncteur-limiteur D2, on prévoit un capteur d'intensité 13 dont la sortie est connectée à un circuit de traitement de signal à seuil 14 susceptible de délivrer un signal de neutralisation S. Le capteur 13 peut avantageusement faire partie du déclencheur magnétique. Le circuit de traitement à seuil peut être intégré au disjoncteur-limiteur amont D2 ou à un bloc additif associé à celui-ci. Dans le cas présent, les circuits de traitement à seuil 14 sont associés aux disjoncteurs-limiteurs D1, D'1, ... et leur servent de circuits de sortie, en étant eux-mêmes reliés au disjoncteur-limiteur amont D2, plus précisément à un circuit d'entrée 15 associé à ce dernier. Le circuit d'entrée 15 est connecté à un circuit 16 de commande des gâchettes de thyristors TH1, TH2 montés tête-bêche en parallèle au circuit principal de puissance du disjoncteur-limiteur amont D2. Selon les cas et notamment en fonction du mode de transmission adopté - bus monoconducteur ou liaison à plusieurs conducteurs - le circuit de traitement à seuil 14 de D1, D'1, ... ou le circuit d'entrée 15 de D2 présente un élément logique assurant la combinaison logique OU. Dans le cas le plus simple, cet élément logique est une diode 18 permettant la neutralisation de D2 à partir de l'un quelconque des disjoncteurs-limiteurs dépendants D1, D'1 ...

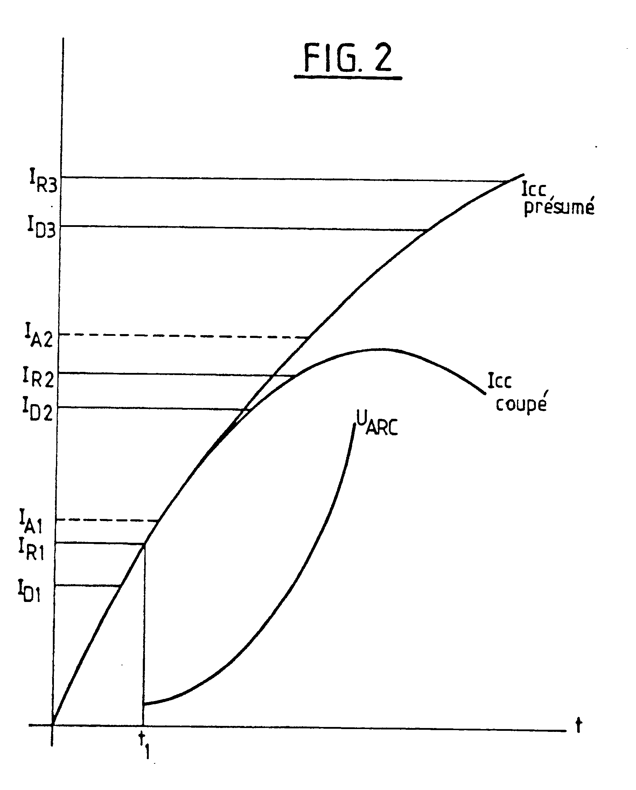

Le fonctionnement du dispositif selon l'invention va être expliqué en regard de la figure 2.

Lorsque survient un courant de court-circuit Icc susceptible de se développer selon la courbe "Icc présumé" dans le circuit terminal protégé par D1, le limiteur de D1 ouvre la branche correspondante à l'instant $t_1$ puis le déclencheur magnétothermique de D1 confirme cette ouverture; il se développe ainsi une tension d'arc $U_{ARC}$ aux bornes de D1.

Les valeurs $I_{A1}$, $I_{D1}$ et $I_{R1}$ désignent respectivement pour le disjoncteur-limiteur D1 les seuils de courant de neutralisation du circuit de traitement à seuil 14, de déclenchement de la serrure 11 et de limitation ou de répulsion électrodynamique de l'organe limiteur. Les valeurs $I_{A2}$, $I_{D2}$, $I_{R2}$ et $I_{A3}$, $I_{D3}$, $I_{R3}$ désignent des seuils homologues pour les disjoncteurs-limiteurs D2 et D3. Le dispositif ne peut fonctionner que si $I_{A1} < I_{D2}$ ou $I_{R2}$ et $I_{A2} < I_{D3}$ ou $I_{R3}$. $I_{AI}$ peut être par exemple égal à $I_{D1}$.

En cas de court-circuit au point A du circuit terminal protégé par D1, dès que le courant atteint le seuil de neutralisation $I_{A1}$ du circuit de traitement 14 de D1, ce dernier délivre un signal de neutralisation S en réponse auquel le circuit 16 de D2 génère un signal d'allumage de préférence de l'ordre de quelques millisecondes pour les gâchettes des thyristors TH1, TH2. L'allumage peut être rendu possible quelques microsecondes après le passage du seuil $I_{A1}$. Avant que le courant franchisse le seuil de limitation $I_{R2}$, la baisse de pression des contacts 12 entraîne une augmentation de la tension anode-cathode des thyristors. Lorsque cette tension atteint par exemple une dizaine de volts, l'allumage de l'un des thyristors est effectif. Celui des deux thyristors qui est devenu passant shunte les contacts du circuit principal de puissance du disjoncteur-limiteur amont D2 juste avant que le courant passe par le seuil de limitation $I_{R2}$ ; de la sorte, le courant est transféré dans le thyristor en empêchant le déclenchement de l'organe limiteur et de la serrure de D2. Le disjoncteur-limiteur D2 continue donc avec l'aide des thyristors tête-bêche d'alimenter les branches aval portant D'l, etc... ce qui détermine la continuité de service recherchée.

Le seuil de déclenchement $I_{D1}$ puis le seuil de limitation $I_{R1}$ ayant été dépassés dans le disjoncteur-limiteur D1, celui-ci coupe la branche correspondante en développant une tension d'arc, de sorte que l'on constate la diminution de $dIcc/dt$ puis de Icc.

Le thyristor mis en conduction reste à l'état passant jusqu'à ce que le courant de court-circuit repasse par zéro, c'est-à-dire conduit pendant au plus une alternance de courant. Les contacts du disjoncteur-limiteur amont D2 recommencent alors à acheminer la totalité du courant de la branche amont. Il convient de noter que la faible durée de conduction des thyristors entraîne une faible dissipation thermique de ceux-ci et donc l'absence de radiateurs. En outre, les thyristors ne coupent pas le courant de court-circuit, puisqu'ils opèrent pour shunter et déshunter le circuit principal de puissance du disjoncteur-limiteur. Ils ne subissent donc pas à coupure des $\frac{dV}{dt}$ importants.

En cas de court-circuit au point B du niveau de distribution N2, la sélectivité peut être assurée de la même manière par des moyens similaires qu'il n'est pas nécessaire de décrire davantage.

Il est prévu dans le circuit de traitement à seuil 14 une logique à retard ou un élément de temporisation interdisant la réémission d'un second signal de neutralisation dans un délai prédéterminé, par exemple supérieur au moins à quelques périodes, après l'émission du premier signal de neutralisation S. De la sorte, en cas de soudure des contacts ou de défaut de coupure du disjoncteur-limiteur aval D1, les disjoncteurs-limiteurs amont D2 - et éventuellement D3 si D1 n'a pas coupé - ne restent neutralisés que pendant au plus une alternance de courant. Ainsi, à l'alternance suivante, la sélectivité n'est plus assurée car les thyristors ne conduisent plus et les deux disjoncteurs amont sont alors sollicités et doivent couper ensemble si le seuil $I_{A2}$ a été atteint. On notera que l'on privilégie ainsi après l'achèvement du délai prédéterminé la sécurité par rapport à la selectivité.

Le dispositif a été décrit dans un souci de simplicité pour un réseau de distribution monophasé, mais il s'applique bien entendu également à la protection de tout réseau de distribution polyphasé. Il s'utilise avantageusement dans le cas de disjoncteurs télécommandés.

Les thyristors TH1, TH2 et les circuits associés à courants faibles 15, 16 et éventuellement 14 peuvent être, soit intégrés dans le boîtier du disjoncteur-limiteur correspondant, soit être logés dans un appareil additif 19 juxtaposable audit boîtier et interconnectable avec les bornes de puissance de celui-ci.

## Revendications

1. Dispositif de protection d'un réseau alternatif de distribution contre les courants de court-circuit, le réseau comprenant au moins un disjoncteur-limiteur amont et au moins un disjoncteur-limiteur aval, ces disjoncteurs-limiteurs étant placés en série sur une branche amont et respectivement sur au moins une branche aval dépendante du réseau et comportant chacun un circuit principal de puissance doté de contacts séparables, d'un déclencheur magnétique et d'un limiteur capables de couper la branche correspondante lorsque le courant atteint respectivement un seuil de déclenchement ($I_D$) et un seuil de limitation ($I_R$), dispositif dans lequel la branche aval présentant le disjoncteur-limiteur aval ($D_1$) est munie d'un capteur d'intensité (13) relié à un circuit de traitement à seuil (14) qui génère un signal (S) de neutralisation d'ouverture des contacts pour le disjoncteur-limiteur amont ($D_2$) lorsque le courant dans la branche aval dépasse un seuil de neutralisation déterminé ($I_{A1}$),

caractérisé en ce que :

- le susdit seuil de neutralisation ($I_{A1}$) est inférieur au seuil de déclenchement (ID) et/ou au seuil de limitation ($I_R$) du disjoncteur-limiteur amont ($D_2$),
- un couple de thyristors tête-bêche (TH1, TH2) est disposé en parallèle au circuit principal de puissance du disjoncteur-limiteur amont ($D_2$), tandis qu'un circuit (16) de commande des gâchettes desdits thyristors est agencé et commandé par le signal de neutralisation (s) provenant du disjoncteur-limiteur aval ($D_1$) pour rendre passant l'un au moins des thyristors et inhiber pendant une durée au plus égale à une alternance le circuit principal de puissance du disjoncteur-limiteur amont (D2).

2. Dispositif de protection selon la revendication 1, caractérisé par le fait que le circuit de traitement à seuil (14) comprend une logique à retard interdisant après l'émission d'un premier signal de neutralisation (S) la réémission d'un autre signal de neutralisation dans un délai prédéterminé.

3. Dispositif de protection selon la revendication I ou 2, caractérisé par le fait que le circuit (16) de commande des gâchettes des thyristors génère un signal d'allumage de l'ordre de quelques millisecondes.

4. Disjoncteur-limiteur pour dispositif de protection selon l'une des revendications I à 3, présentant :

- un circuit principal de puissance doté de contacts séparables, d'un déclencheur magnétique susceptible d'ouvrir lesdits contacts lorsque le courant atteint un seuil de déclenchement ($I_D$) et d'un limiteur capable de couper la branche correspondante lorsque le courant atteint un seuil de limitation ($I_R$),

caractérisé par le fait qu'il comprend :

- un capteur d'intensité (13) relié à un circuit de traitement à seuil d'intensité (14) qui génère un signal (S) de neutralisation d'ouverture des contacts pour un disjoncteur-limiteur amont,
- un couple de thyristors tête-bêche (TH1, TH2) disposé en parallèle sur le circuit principal de puissance, ainsi qu'un circuit (16) de commande des gâchettes des thyristors agencé et comandé par le signal de neutralisation (S) provenant d'un disjoncteur-limiteur aval dépendant pour rendre passant l'un au moins des thyristors et inhiber pendant une durée au plus égale à une alternance ledit circuit principal de puissance.

5. Disjoncteur-limiteur selon la revendication 4, caractérisé par le fait qu'il comprend un élément logique assurant la combinaison logique "OU" des signaux de neutralisation de plusieurs disjoncteurs-limiteurs aval dépendant d'un même disjoncteur-limiteur amont.

## Claims

1. A device for protecting an AC distribution network against short circuit currents, the network comprising at least one upstream current limiting circuit breaker and at least one downstream current limiting circuit breaker, these current limiting circuit breakers being placed in series in an upstream branch and respectively in at least one dependent downstream branch of the network and each including a main power circuit with separable contacts, a magnetic tripping means and a current limiter capable of cutting off the corresponding branch when the current reaches respectively a tripping threshold ($I_D$) and a limitation threshold ($I_R$), device in which the downstream branch having the downstream current limiting circuit breaker (D1) is provided with a current sensor (13) connected to a threshold processing circuit (14) which generates a neutralization signal (S) for opening the contacts for the upstream current limiting circuit breaker (D2) when the current in the downstream branch exceeds a predetermined neutralization threshold ($I_{A1}$), characterized in that :
   - said neutralization threshold ($I_{A1}$) is lower than the tripping threshold ($I_D$) and/or than the current limiting threshold ($I_R$) of the upstream current limiting circuit breaker (D2) ;
   - a pair of head to tail thryristors (TH1, TH2) is disposed in parallel with the main power circuit of the upstream current limiting circuit breaker (D2), whereas a circuit (16) for controlling the gates of said thyristors is adapted and controlled by the neutralization signal (S) coming from the downstream current limiting circuit breaker (D1) so as to enable one at least of the thyristors and inhibit the main power circuit of the upstream current limiting circuit breaker (D2) for a time at most equal to a current half wave.

2. Protection device according to claim 1, characterized by the fact that the threshold processing circuit (14) includes a delay logic prohibiting, after emission of a first neutralization signal (S), the re-emission of another neutralization signal within a predetermined time.

3. Protection device according to claim 1, characterized by the fact that the circuit (16) for controlling the gates of the thyristors generates a firing signal of the order of a few milliseconds.

4. Current limiting circuit breaker for a protection device according to one of claims 1 to 3, including
   - a main power circuit with separable contacts, a magnetic tripping means capable of opening said contacts when the current reaches a tripping threshold ($I_D$) and a current limiter capable of cutting off the corresponding branch when the current reaches a limitation threshold ($I_R$), characterized by the fact that it includes:
   - a current sensor (13) connected to a current threshold processing circuit (14) which generates a signal (S) for neutralizing opening of the contacts for an upstream current limiting circuit breaker,
   - a pair of head to tail thyristors (TH1, TH2) disposed in parallel with the main power circuit, as well as a circuit (16) for controlling the gates of the thyristors adapted and controlled by the neutralization signal (S) coming from a dependent downstream current limiting circuit breaker so as to enable one at least of the thyrsistors and inhibit said main power circuit for a time at most equal to a half wave.

5. Current limiting circuit breaker according to claim 4, characterized by the fact that it includes a logic element ensuring the logic "OR" combination of the neutralization signals from several downstream current limiting circuit breakers dependent on the same upstream current limiting circuit breaker

**Patentansprüche**

1. Kurzschlusschutzvorrichtung für ein Wechselstromverteilernetz, wobei das Netz mindestens einen oberhalb angeordneten und mindestens einen unterhalb angeordneten Begrenzungsschalter aufweist, die jeweils in Serie in einem oberen Zweig und in mindestens einem unteren, vom Netz abhängigen Zweig vorgesehen sind und jeweils eine Leistungsschaltung mit trennbaren Kontakten, einen Magnetauslöser und einem Strombegrenzer aufweisen, welche den entsprechenden Zweig unterbrechen können, wenn der Strom jeweils eine Auslöseschwelle ($I_D$) und eine Begrenzungsschwelle ($I_R$) erreicht, Vorrichtung, in welcher der untere Zweig mit dem unteren Begrenzungsschalter ($D_1$) mit einem Stromsensor (13) versehen ist, der an einen Schwellenwertverarbeitungskreis (14) angeschlossen ist, der ein Neutralisiersignal (S) zur Öffnung der Kontakte für den oberen Begrenzungsschalter ($D_2$) erzeugt, wenn der Strom im unteren Zweig einen be-stimmten Neutralisierschwellenwert ($I_{A1}$) über-steigt,
dadurch gekennzeichnet, dass :

   - besagter Neutralisierschwellenwert ($I_{A1}$) unter dem Auslöseschwellenwert ($I_D$) und/oder dem Begrenzungsschwellenwert ($I_R$) des oberen Bregrenzungsschal-ters ($D_2$) liegt;
   - ein Paar Kopf bei Fuss angeordnete Thyristoren (TH1, TH2) parallel zum Haupt-leistungskreis des oberen Begrenzungs-schalters ($D_2$) angeordnet ist, während ein Steuerkreis (16) für die Tore der besagten Thyristoren vom Neutralisiersignal (s) des unteren Begrenzungsschalters ($D_1$) erstellt und gesteuert wird, um mindestens einen der Thyristoren leitend zu machen und im Hauptleistungskreis des oberen Begrenzunsschalters ($D_2$) für mindestens die Dauer einer Halbperiode den Stromfluss zu unterbrechen.

2. Schutzvorrichtung nach Anspruch 1,
dadurch gekennzeichnet, dass der Schwellen-wertverarbeitungskreis (14) eine Verzögerungs-logik aufweist, die, nach Abgabe eines ersten Neutralisiersignals (S), die Abgabe eines weite-ren Neutralisiersignals während einer bestimm-ten Zeit verhindert.

3. Schutzvorrichtung nach Anspruch 1 oder 2,
dadurch gekennzeichnet, dass der Steuerkreis (16) für die Tore der Thyristoren ein Zündsignal von einigen Millisekunden erzeugt.

4. Begrenzungsschalter für eine Schutzvorrichtung nach einem der Ansprüche 1 bis 3, mit :

   - einem Hauptleistungskreis, der mit trennbaren Kontakten versehen ist, sowie mit einem Magnetauslöser, welcher besagte Kontakte öffnen kann, wenn der Strom einen Auslöseschwellenwert ($I_D$) erreicht, und einem Begrenzer, welcher den entsprechenden Zweig unterbricht, wenn der Strom einen Begrenzungsschwellenwert ($I_R$) erreicht,

   dadurch gekennzeichnet, dass er aufweist :

   - einen, an einen Schwellenwertverarbei-tungskreis (14) angeschlossenen, Strom-messer (13) , welcher ein Neutralisiersi-gnal (S) zur Öffnung der Kontakte für einen oberen Begrenzungsschalter erzeugt,
   - ein Paar Kopf bei Fuss und parallel zum Hauptleistungskreis angeordnete Thyristoren (TH1, TH2) , sowie einen Steuerkreis (16) für die Tore der Thyristoren, der vom Neutralisiersignal (S) eines unteren abhängigen Begrenzungsschalters erstellt und gesteuert wird, um mindestens einen der Thyristoren leitend zu machen und in besagtem Hauptlei-stungskreis für mindestens eine Halbpe-riode den Stromfluss zu unterbrechen.

5. Begrenzungsschalter nach Anspruch 4,
dadurch gekennzeichnet, dass er ein logisches Element aufweist, welches die logische ODER-Kombination der Neutralisiersignale mehrerer unterer, vom gleichen oberen Begrenzungs-schalter abhängiger Begrenzungsschalter er-möglicht.

FIG.1

# FIG. 2